(19) **Europäisches Patentamt / European Patent Office / Office européen des brevets**

(11) **EP 2 821 534 A1**

(12) **EUROPEAN PATENT APPLICATION**
published in accordance with Art. 153(4) EPC

(43) Date of publication:
**07.01.2015 Bulletin 2015/02**

(51) Int Cl.:
**D01F 8/14** *(2006.01)* **D01F 8/10** *(2006.01)*

(21) Application number: **13754107.4**

(22) Date of filing: **21.02.2013**

(86) International application number:
**PCT/JP2013/054399**

(87) International publication number:
**WO 2013/129240 (06.09.2013 Gazette 2013/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.03.2012 JP 2012045707**

(71) Applicant: **Kureha Corporation**
**Chuo-ku**
**Tokyo 103-8552 (JP)**

(72) Inventor: **SAIGUSA Kotaku**
**Tokyo 103-8552 (JP)**

(74) Representative: **Hoffmann Eitle**
**Patent- und Rechtsanwälte PartmbB**
**Arabellastraße 30**
**81925 München (DE)**

(54) **WATER-DISINTEGRABLE COMPOSITE FIBER AND PROCESS FOR PRODUCING SAME**

(57) A water-disintegrable composite fiber comprising: a phase containing a polyglycolic acid resin; and a phase containing another resin having a mass loss of 25% or greater after immersion for 7 days in 80°C pure water and having a glass transition temperature Tg of 25°C or higher;
the two phases extending continuously in the lengthwise direction; and
the fiber having a side surface in which a region formed from the phase containing the polyglycolic acid resin is 50% or less in terms of area ratio, and a cross section in which a region formed from the phase containing the polyglycolic acid resin is 50% or greater in terms of area ratio.

FIG. 1A

**Description**

TECHNICAL FIELD

The present invention relates to a water-disintegrable composite fiber and a method of producing the same. More particularly, the present invention relates to a water-disintegrable composite fiber containing a polyglycolic acid resin and a method of producing the same.

BACKGROUND ART

Drawn yarns formed from polyglycolic acid resins have been used conventionally as surgical sutures in the medical field and the like due to their excellent mechanical strength as well as their biodegradability and bioabsorbability. In addition, since polyglycolic acid resins demonstrate rapid hydrolyzability in not only high-temperature environments but also low-temperature environments, applications of fibers formed from polyglycolic acid resins to a drilling or completion field of oil recovery and the like are also being investigated.

A conventional drawn yarn formed from a polyglycolic acid resin is either produced by a Spinning Drawn Yarn method (SDY method) or is produced by a method of producing an undrawn yarn by discharging a polyglycolic acid resin in a molten state from a spinneret and then rapidly cooling the polyglycolic acid resin and then drawing the yarn. The latter is efficient for mass production, but when the temperature of operating environment or the temperature and humidity during storage are high, the undrawn polyglycolic acid yarn agglutinates, and then the undrawn polyglycolic acid yarn cannot be drawn due to deterioration in the unwindability at drawing.

In addition, Japanese Unexamined Patent Application Publication No. 2000-265333A (Patent Document 1) discloses a biodegradable composite fiber using such a polyglycolic acid resin, which comprises a core part formed from a polyglycolic acid resin and a sheath part formed from an aliphatic polyester comprising dibasic acid and a diol. This biodegradable composite fiber had a moderate hydrolysis rate and it was made for the purpose of controlling the high hydrolyzability of the polyglycolic acid resin fibers, therefore it was unsuitable for applications such as a drilling or completion field of oil recovery and the like requiring rapid hydrolyzability in both high-temperature and low-temperature environments.

CITATION LIST

Patent Literature

Patent Document 1: Japanese Unexamined Patent Application Publication No. 2000-265333A

SUMMARY OF INVENTION

Technical Problem

Furthermore, the biodegradable composite fiber described in Patent Document 1 has the problem that the productivity is poor due to a tendency for the characteristics of the undrawn yarn to change during storage.

The present invention was conceived in light of the issues of the conventional technology described above, and an object of the present invention is to provide a water-disintegrable composite fiber having a high mechanical strength and demonstrating a high hydrolysis rate at both high and low temperatures, and excellent undrawn yarn unwindability and a method of producing the same.

Solution To Problem

The present inventors have conducted earnest study to achieve the above-described object. As a result, the present inventors discovered that a water-disintegrable composite fiber demonstrating excellent unwindability as an undrawn yarn and having high strength and a high hydrolysis rate at both high temperatures (for example, 60°C or higher) and low temperatures (for example, less than 60°C) as a drawn yarn can be obtained by forming a fiber structure in which, in a water-disintegrable composite fiber comprising the phase containing the polyglycolic acid resin and a phase containing another resin with a high hydrolysis rate, the other resin has a prescribed glass transition temperature, the side surface has a small region formed from the phase containing the polyglycolic acid resin, and the cross section has a large region formed from the phase containing the polyglycolic acid resin. The present inventors thereby completed the present invention.

That is, the water-disintegrable composite fiber of the present invention is an undrawn or drawn fiber comprising a phase containing a polyglycolic acid resin and a phase containing another resin having a mass loss of 25% or greater after immersion for 7 days in 80°C pure water and having a glass transition temperature Tg of 25°C or higher; the two phases extending continuously in a lengthwise direction; and the fiber having a side surface in which a region formed from the phase containing the polyglycolic acid resin is 50% or less in terms of area ratio, and a cross section in which a region formed from the phase containing the polyglycolic acid resin is 50% or greater in terms of area ratio.

In such a water-disintegrable composite fiber, the fiber structure is preferably at least one type selected from a core-sheath type, a multicore type, a side-by-side type, a multiple-division type, a multilayer type, and a radial type structure. The other resin is preferably at least one type selected from the group consisting of poly-L-lactic acid, poly-DL-lactic acid, polyvinyl alcohol, and poly(ethylene terephthalate/succinate), and the single fiber fineness is preferably at most 10 denier.

In addition, fibers of various structures such as hollow fibers or micro- fibers can be obtained by removing either the polyglycolic acid resin or the other resin from the water-disintegrable composite fiber of the present invention, and a water-disintegrable composite staple fiber can be obtained by cutting the water-disintegrable composite fiber of the present invention. This water-disintegrable composite staple fiber can be suitably used as an additive for drilling or completion of oil and gas recovery.

The method of producing the water-disintegrable composite fiber of the present invention is a method comprising the steps of: continuously discharging a polyglycolic acid resin and another resin, the other resin having a mass loss of 25% or greater after immersion for 7 days in 80°C pure water and a glass transition temperature of 25°C or higher, from a spinneret for composite fibers in a molten state so as to form a fibrous composite; and cooling the fibrous composite to obtain an undrawn yarn of fiber comprising a phase containing the polyglycolic acid resin and a phase containing the other resin, the undrawn yarn of fiber having a side surface in which the region formed from the phase containing the polyglycolic acid resin is 50% or less in terms of area ratio, and a cross section in which the region formed from the phase containing the polyglycolic acid resin is 50% or greater in terms of area ratio.

In addition, in the method of producing the water-disintegrable composite fiber of the present invention, the resulting undrawn yarn may be drawn after being stored so as to obtain a drawn yarn of fiber comprising a phase containing the polyglycolic acid resin and a phase containing the other resin, the drawn yarn of fiber having a side surface in which the region formed from the phase containing the polyglycolic acid resin is 50% or less in terms of area ratio, and a cross section in which the region formed from the phase containing the polyglycolic acid resin is 50% or greater in terms of area ratio.

Furthermore, in the method of producing the water-disintegrable composite fiber of the present invention, an undrawn yarn is obtained by cooling the fibrous composite. However, prior to the cooling of the fibrous composite discharged from the spinneret, it is preferable to hold the fibrous composite in an ambient temperature which is at least 110.5°C and at most the melting point of the polyglycolic acid resin, for at least 0.0012 seconds after discharging the composite.

In the present invention, the "unwinding" of the undrawn yarn refers to unwinding the undrawn yarn so that the yarn can be drawn. Specifically, this refers to unwinding an undrawn yarn that is wound around a bobbin or the like or is housed in a tow can into a unit that can be drawn (for example, one strand). In addition, in the present invention, the undrawn yarn, the drawn yarn, and the staple fiber are collectively described as a "water-disintegrable composite fiber".

Although the reason that the undrawn yarn of the water-disintegrable composite fiber of the present invention is resistant to agglutination is not exactly clear, the present inventors hypothesize as follows. Specifically, the undrawn yarn of the polyglycolic acid resin absorbs water during storage or when the application of an oiling agent during spinning. The Tg of the undrawn yarn of the polyglycolic acid resin that has absorbed water tends to decrease over time during storage, and this tendency intensifies as the storage temperature increases. When the Tg decreases to around the storage temperature, it is hypothesized that the undrawn yarn becomes prone to changes in surface characteristics, shape, or the like and the single fibers agglutinate to one another.

On the other hand, it is hypothesized that the effects of water absorption during spinning or storage in the other resin of the present invention are less likely to affect changes in the Tg over time than in the polyglycolic acid resin. Furthermore, since polylactic acid, polyvinyl alcohol, and poly(ethylene terephthalate/succinate) have a higher Tg than those of polyglycolic acid resin, it is hypothesized that those are resistant to agglutination even when stored at the temperature at which the undrawn yarn of polyglycolic acid resin agglutinates..

Accordingly, in the water-disintegrable composite fiber of the present invention, it is hypothesized that since a large region of the side surfaces consists of such resins which are less affected by the water absorption and have higher Tg than polyglycolic acid resin, those function sufficiently acts on the Tg of the polyglycolic acid resin, and decreases in the Tg of the polyglycolic acid resin over time are thereby suppressed. As a result, it is hypothesized that changes in the surface characteristics or shape of the undrawn yarn are suppressed so that agglutination is unlikely to occur.

In contrast, it is hypothesized that since most biodegradable resins such as polyhydroxybutyrate, polybutylene succinate, or polycaprolactone have a much lower Tg than polyglycolic acid resin, the undrawn yarns of such resins are more prone to change in characteristics than that of the polyglycolic acid resin. Therefore, it is hypothesized that the agglutination of the undrawn yarn does not improve even when a composite fiber of a biodegradable resin having a low Tg such as polyhydroxybutyrate and a polyglycolic acid resin is formed.

Advantageous Effects of Invention

The present invention makes possible to obtain a water-disintegrable composite fiber having high strength as well as a high hydrolysis rate and excellent unwindability of the undrawn yarn at both high and low temperatures.

Brief Description of the Drawings

FIG. 1A is a schematic view illustrating a preferred embodiment of the structure of a concentric core-sheath type water-disintegrable composite fiber of the present invention.
FIG. 1B is a schematic view illustrating a preferred embodiment of the structure of an eccentric core-sheath type water-disintegrable composite fiber of the present invention.
FIG. 1C is a schematic view illustrating a preferred embodiment of the structure of a multicore type water-disintegrable composite fiber of the present invention.
FIG. 1D is a schematic view illustrating a preferred embodiment of the structure of a side-by-side type water-disintegrable composite fiber of the present invention.
FIG. 1E is a schematic view illustrating a preferred embodiment of the structure of a multiple-division type water-disintegrable composite fiber of the present invention.
FIG. IF is a schematic view illustrating a preferred embodiment of the structure of a multilayer type water-disintegrable composite fiber of the present invention.
FIG. 1G is a schematic view illustrating a preferred embodiment of the structure of a radial type water-disintegrable composite fiber of the present invention.
FIG. 2 is a schematic view illustrating a melt spinning device used in the working examples and comparative examples.
FIG. 3 is a schematic view illustrating a drawing device used in the working examples and comparative examples.

Description of Embodiments

The present invention will be described in detail hereinafter using preferred embodiments thereof.
The water-disintegrable composite fiber of the present invention comprises a phase containing a polyglycolic acid resin and a phase containing another resin which has a high hydrolysis rate and a prescribed glass transition temperature. First, the polyglycolic acid resin and the other resin used in the present invention will be described.

(Polyglycolic acid resin)

The polyglycolic acid resin (hereafter abbreviated as "PGA resin") used in the present invention is a glycolic acid homopolymer consisting of repeating units of a glycolic acid represented by the following formula (1) (including glycolide ring-opened polymers, which are bimolecular cyclic esters of glycolic acids):

$$-[O-CH_2-C(=O)]- \qquad (1)$$

Such a PGA homopolymer can be synthesized by the dehydration polycondensation of a glycolic acid, de-alcohol polycondensation of a glycolic acid alkyl ester, the ring-opening polymerization of a glycolide, or the like. Of these, the PGA homopolymer is preferably synthesized by the ring-opening polymerization of a glycolide. In addition, such ring-opening polymerization can be performed by bulk polymerization or solution polymerization.
Examples of catalysts used when producing the PGA resin by the ring-opening polymerization of a glycolide include publicly known ring-opening polymerization catalysts such as tin compounds such as tin halide and organic tin carboxylate; titanium compounds such as alkoxy titanate; aluminum compounds such as alkoxyaluminum; zirconium compounds such as zirconium acetyl acetone; and antimony compounds such as antimony halide and antimony oxide.
The PGA resin can be produced by a conventionally known polymerization method, but the polymerization temperature is preferably from 120 to 300°C, more preferably from 130 to 250°C, and particularly preferably from 140 to 220°C. When the polymerization temperature is less than the lower limit described above, polymerization tends to not progress sufficiently, whereas when the polymerization temperature exceeds the upper limit described above, the resin that is produced tends to be thermally decomposed.

In addition, the polymerization time of the PGA resin is preferably from 2 minutes to 50 hours, more preferably from 3 minutes to 30 hours, and particularly preferably from 5 minutes to 18 hours. When the polymerization time is less than the lower limit described above, polymerization tends to not progress sufficiently, whereas when the polymerization time exceeds the upper limit described above, the resin that is produced tends to be discolored.

The average molecular weight of such a PGA resin is preferably from 50,000 to 800,000, and more preferably from 80,000 to 500,000. When the average molecular weight of the PGA resin is less than the lower limit described above, the mechanical strength of the resulting composite fiber tends to be diminished, whereas when the average molecular weight exceeds the upper limit described above, it tends to become difficult to discharge the PGA resin in a molten state. The average molecular weight is a value in terms of polymethyl methacrylate measured by gel permeation chromatography (GPC).

The melt viscosity of the PGA resin (temperature: 240°C, shearing rate: 122 $sec^{-1}$) is preferably from 1 to 10,000 Pa•s, more preferably from 100 to 6,000 Pa•s, and particularly preferably from 300 to 4,000 Pa•s. When the melt viscosity is less than the lower limit described above, the spinnability is diminished and the fiber tends to have thread breakage in some parts, whereas when the melt viscosity exceeds the upper limit described above, it tends to become difficult to discharge the PGA resin in a molten state.

In the present invention, such a PGA resin may be used alone, and various additives such as thermal stabilizers, end-capping agents, plasticizers, and UV absorbers or other thermoplastic resins may be added as necessary.

(Other resin)

The other resin used in the present invention is except polyglycolic acid and the resin has a mass loss of 25% or greater when immersed for 7 days in 80°C pure water and a glass transition temperature Tg of 25°C or higher.

In the present invention, when the mass loss is less than 25%, the hydrolysis rate of the resulting composite fiber becomes low. Accordingly, the mass loss is preferably 30% or higher, and more preferably 40% or higher from the perspective of achieving a higher hydrolysis rate of the composite fiber. The other resin used in the present invention may be completely hydrolyzed under the conditions described above, and the mass loss in this case is 100%.

In addition, when the glass transition temperature of the other resin is less than 25°C, it becomes difficult to handle the resulting undrawn yarn. In particular, agglutination occurs during storage of the undrawn yarn, and the unwindability is diminished. From the perspective of ensuring that the undrawn yarn demonstrates more reliable unwindability in the composite fiber of the present invention, the glass transition temperature of the other resin is preferably 45°C or higher, more preferably 50°C or higher, and particularly preferably 55°C or higher. Although there is no particular restriction on the upper limit of the glass transition temperature of the other resin, the glass transition temperature is preferably 150°C or lower from the perspective of drawing a composite fiber containing a polyglycolic acid.

Examples of other resins having a high hydrolysis rate and a prescribed glass transition temperature include poly-L-lactic acids (homopolymers of L-lactic acid (including ring-opened polymers of L-lactides, which are bimolecular cyclic esters of L-lactic acid; hereafter abbreviated as "PLLA resins")), poly-DL-lactic acids (copolymers of D-lactic acid and L-lactic acid (including ring-opened polymers of D/L-lactides, which are bimolecular cyclic esters of D-lactic acid and L-lactic acid); hereafter abbreviated as "PDLLA resins"), poly(L-lactic acid-co-ε-caprolactones) (copolymers of L-lactic acid and ε-caprolactone; hereafter abbreviated as "PLLC"), polyvinyl alcohols (hereafter abbreviated as "PVA resins"), and poly(ethylene terephthalate/succinate) (copolymers of ethylene glycol, terephthalic acid, and succinic acid; hereafter abbreviated as "PETS").

The average molecular weight of this other resin is not particularly limited and is set appropriately in accordance with the type of the resin, but from the perspective of spinnability, for example, the average molecular weight is preferably from 70,000 to 500,000 in the case of a PLLA resin. The average molecular weight is a value in terms of polymethyl methacrylate measured by gel permeation chromatography (GPC).

The melt viscosity of the other resin is not particularly limited and is set appropriately in accordance with the type of the resin, but the melt viscosity is preferably from 1 to 10,000 Pa•s, more preferably from 100 to 6,000 Pa•s, and particularly preferably from 300 to 4,000 Pa•s.

<Water-disintegrable composite fiber>

The water-disintegrable composite fiber of the present invention will be described. The water-disintegrable composite fiber of the present invention is an undrawn or drawn yarn comprising a phase containing a PGA resin (hereafter called the "PGA resin phase") and a phase containing another resin (hereafter called "the other resin phase"), the two phases extending continuously in the lengthwise direction of the fiber, and the fiber having a side surface in which the region formed from the PGA resin phase is 50% or less in terms of area ratio, and a cross section in which the region formed from the PGA resin phase is 50% or greater in terms of area ratio.

On the side surface of the water-disintegrable composite fiber of the present invention, the region formed from the PGA resin phase is 50% or less in terms of area ratio. When the area ratio of the region formed from the PGA resin phase exceeds 50% on the side surface, the undrawn yarn becomes prone to agglutination, and the unwindability after storage, in particular, the unwindability after storage at high temperature and high humidity (for example, at a temperature of 40°C and relative humidity of 80%RH), is diminished. Accordingly, from the perspective of improving the unwindability of the undrawn yarn, the area ratio of the region formed from the PGA resin phase on the side surface is preferably 40% or less, more preferably 30% or less, even more preferably 15% or less, and particularly preferably 10% or less. In addition, it is particularly preferable that the region formed from the PGA resin phase doesn't be exposed to the side surface of the water-disintegrable composite fiber of the present invention, so the lower limit of the area ratio is particularly preferably 0% or higher.

On the other hand, in the cross section of the water-disintegrable composite fiber of the present invention, the region formed from the PGA resin phase is 50% or higher in terms of area ratio. When the area ratio of the region formed from the PGA resin phase is less than 50% in the cross section, the characteristics of the PGA resin are not sufficiently expressed, and the strength of the fiber is diminished. When the proportion of the other resin becomes large, the hydrolysis rate of the composite fiber is diminished when the mass loss of the other resin is lower than that of the PGA resin, even if the mass loss is within the range described above. On the other hand, when the mass loss of the other resin is higher than that of the PGA resin, the hydrolysis rate of the composite fiber is not diminished, so there is no problem. Accordingly, from the perspectives of having the high strength of the composite fiber and further increasing the hydrolysis rate, the area ratio of the region formed from the PGA resin phase in the cross section is preferably 55% or higher, more preferably 60% or higher, even more preferably 70% or higher, particularly preferably 80% or higher, and most preferably 99% or higher. The upper limit of the area ratio of the region formed from the PGA resin phase in the cross section is not particularly limited but is preferably 99.5% or less.

In this way, the water-disintegrable composite fiber of the present invention has a specific fiber structure that is formed by a PGA resin and another resin having a high hydrolysis rate and a prescribed glass transition temperature, so the undrawn yarn is resistant to agglutination and has excellent unwindability after storage, in particular, unwindability after storage at high temperature and high humidity (for example, at a temperature of 40°C and relative humidity of 80%RH). Therefore, the fiber can be easily unwound when producing a drawn yarn, even if wound around a bobbin or the like or housed in a sliver can for storage. Accordingly, the undrawn yarn can be produced and stored in large quantities and can also be supplied stably, which enables the adjustment of the production of a drawn yarn. In addition, since low-temperature storage is unnecessary, it is possible to cut the production cost (storage cost) for producing a drawn yarn.

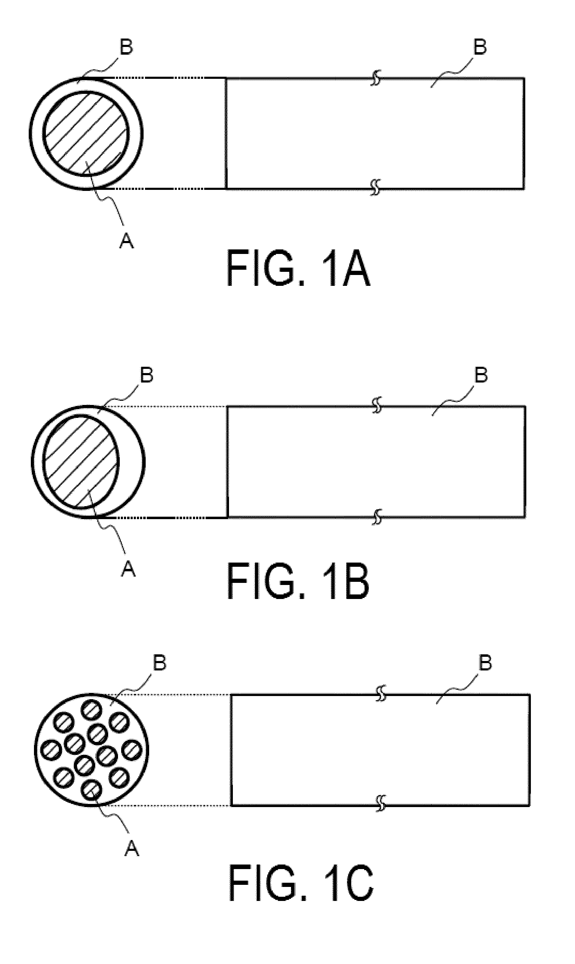

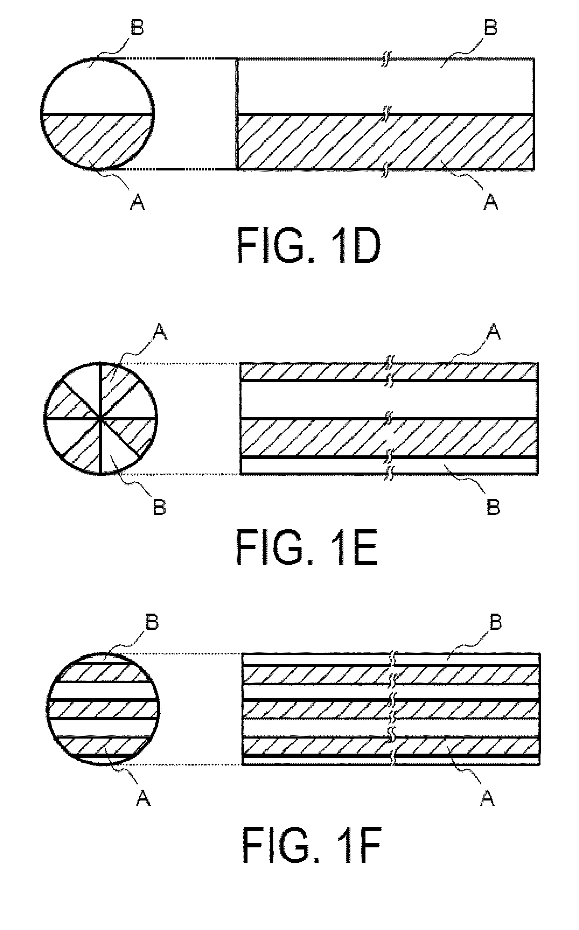

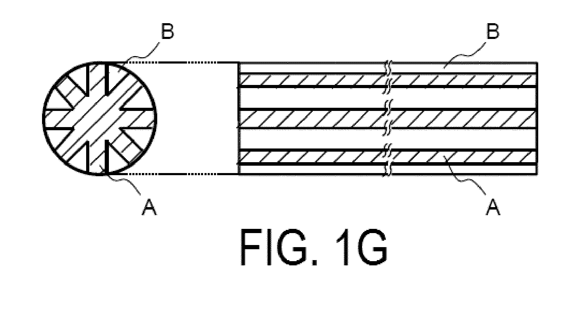

Specific examples of fiber structures of the water-disintegrable composite fiber of the present invention include a concentric core-sheath type structure (see FIG. 1A), an eccentric core-sheath type structure (see FIG. 1B), a multicore type structure (see FIG. 1C), a side-by-side type structure (see FIG. 1D), a multiple-division type structure (see FIG. 1E), a multilayer type structure (see FIG. 1F), a radial type structure (see FIG. 1G), and composite structures combining two or more types thereof. In FIGS. 1A to 1G, the left figure is a schematic view of the cross section of the composite fiber, and the right figure is a schematic view of the side surface. In addition, in FIGS. 1A to 1G, A represents the PGA resin phase, and B represents the other resin phase. Of these fiber structures, a concentric core-sheath type structure, an eccentric core-sheath type structure, or a multicore type structure is preferable from the perspective of ensuring excellent unwindability in the undrawn yarn and ensuring high strength and a high hydrolysis rate in the drawn yarn at both high and low temperatures.

In such a water-disintegrable composite fiber of the present invention, the tensile elongation of the undrawn yarn after storage is preferably 150% or higher, and more preferably 250% or higher. When the tensile elongation is less than the lower limit described above, it tends to become difficult to obtain a drawn yarn with a low single fiber fineness and high elongation.

In addition, since the undrawn yarn has a high tensile elongation and can be drawn with a relatively high draw ratio, a drawn yarn formed by drawing the undrawn yarn tends to have a low single fiber fineness of 10 denier or less (preferably 5 denier or less), a high tensile strength of 5.0 gf/denier or higher (preferably 6.0 gf/denier or higher, and more preferably 7.0 gf/denier or higher), and a high tensile elongation of 20% or higher (preferably 25% or higher, and more preferably 30% or higher). By using such a water-disintegrable composite fiber with a low single fiber fineness, high strength, and high elongation, it is possible to design new fiber products having high strength, high elongation, and high water disintegrability. The lower limit of the single fiber fineness is not particularly limited but is preferably 1 denier or higher.

<Method of producing the water-disintegrable composite fiber>

Next, a preferred embodiment of the method of producing the water-disintegrable composite fiber of the present invention will be described with reference to the drawings, but the method of producing the water-disintegrable composite fiber of the present invention is not limited to these drawings. In the following explanations and drawings, elements that are identical or equivalent are labeled with the same symbols, and duplicate explanations will be omitted.

In the method of producing the water-disintegrable composite fiber of the present invention, a PGA resin in a molten state and the other resin described above in a molten state are continuously discharged from a spinneret for composite fibers so as to form a fibrous composite (discharge step). At this time, the resulting fibrous composite may be held in a prescribed ambient temperature for a prescribed amount of time after being discharged as necessary (heat retaining step). The fibrous composite is then cooled to obtain an undrawn yarn (cooling step). In the method of producing the water-disintegrable composite fiber of the present invention, the undrawn yarn may be mass-produced and stored (storage step) and subjected to drawing processing as necessary to obtain a drawn yarn (drawing step).

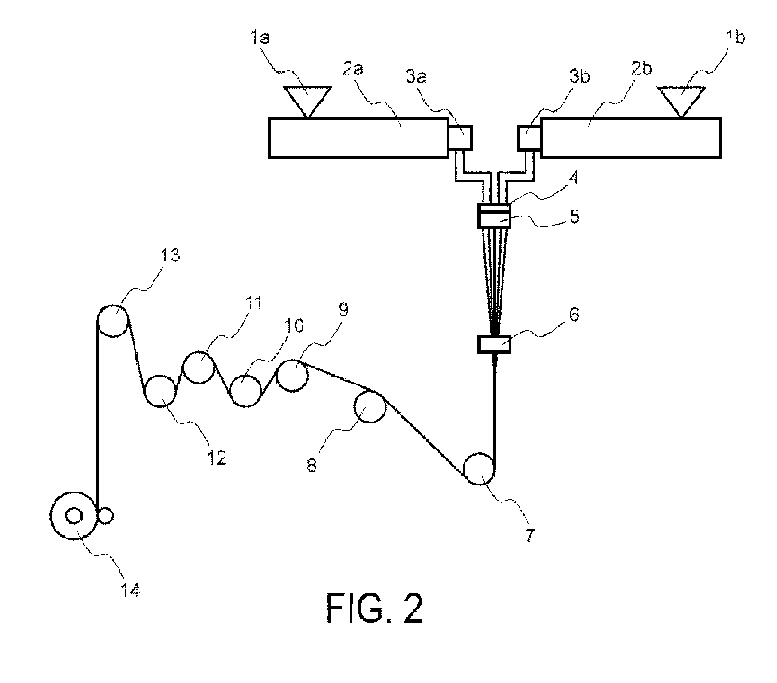

The PGA resin and the other resin in the molten state can be prepared by melt-kneading using an extruder or the like. For example, when producing an undrawn yarn using the melt spinning device illustrated in FIG. 2, a PGA resin in a pellet form or in another form and the other resin described above are each independently loaded into extruders 2a and 2b from raw material hoppers 1a and 1b, and each the PGA resin and the other resin is melt-kneaded.

The melt temperature of the PGA resin is preferably from 200 to 300°C, and more preferably from 210 to 270°C. When the melt temperature of the PGA resin is less than the lower limit described above, the fluidity of the PGA resin is diminished, and the PGA resin is not discharged from the spinneret, which makes it difficult to form a fibrous composite. On the other hand, when the melt temperature exceeds the upper limit described above, the PGA resin tends to be discolored or thermally decomposed.

The melt temperature of the other resin is not particularly limited and is set appropriately in accordance with the type of the resin, for example, with a PLLA resin (4032D made by the Nature Works LLC), the melt temperature is preferably from 170 to 280°C, and more preferably from 210 to 240°C, from the perspective of the thermal decomposition properties of the PLLA resin.

In such a melt-kneading process, a stirrer, a continuous kneader, or the like can be used instead of an extruder, but it is preferable to use an extruder from the perspective that processing can be accomplished in a short period of time and that a smooth transition can be made to the subsequent discharge step.

(Discharge step)

In the discharge step of the present invention, the PGA resin and the other resin in the molten state prepared as described above are discharged from a spinneret for composite fibers after appropriately setting the operating conditions such as the discharge rate in accordance with the physical properties of the resin such as the melting properties so as to form a fibrous composite comprising a phase containing the PGA resin in a molten state (hereafter called the "molten PGA resin phase") and a phase containing the other resin in the molten state described above (hereafter called the "other molten resin phase"), the composite having a side surface in which the region formed from the molten PGA resin phase is 50% or less in terms of area ratio (preferably 40% or less, more preferably 30% or less, even more preferably 15% or less, and particularly preferably 10% or less) and a cross section in which the region formed from the molten PGA resin phase is 50% or greater in terms of area ratio (preferably 55% or greater, more preferably 60% or greater, even more preferably 70% or greater, particularly preferably 80% or greater, and most preferably 99% or greater). For example, in the melt spinning device illustrated in FIG. 2, the PGA resin in a molten state is transferred to a spinneret 4 from the extruder 2a while regulating the volume using a gear pump 3a, and the other resin in a molten state is transferred to the spinneret 4 from the extruder 2b while regulating the volume using a gear pump 3b. The PGA resin and the other resin are then discharged from the hole of the spinneret 4 in an incompatible state to form a fibrous composite having the cross section and the side surface described above.

A conventionally known spinneret for composite fibers can be used as the spinneret 4 as long as a fibrous composite having the cross section and the side surface described above can be formed. For example, a concentric core-sheath type, an eccentric core-sheath type, a multicore type, a side-by-side type, a multiple-division type, a multilayer type, a radial type, or a composite type spinneret for composite fibers comprising two or more types thereof may be used as long as the region where the PGA resin in a molten state is discharged accounts for 50% or greater for one hole in terms of area ratio (preferably 55% or greater, more preferably 60% or greater, even more preferably 70% or greater, particularly preferably 80% or greater, and most preferably 99% or greater). In addition, in the present invention, the number of holes and the hole diameter of such a spinneret for composite fibers are not particularly limited.

The discharge temperature of the PGA resin and the other resin in a molten state, that is, the discharge temperature of the composite in a molten state (spinneret temperature), is preferably from 210 to 280°C, and more preferably from 235 to 268°C. When the discharge temperature is less than the lower limit described above, the fluidity of the PGA resin is diminished, and the resins are not discharged from the spinneret, which makes it difficult to form the fibrous composite. On the other hand, when the discharge temperature exceeds the upper limit described above, the composite tends to be prone to thermally decompose.

(Heat retaining step)

In the method of producing the water-disintegrable composite fiber of the present invention, it is preferable to hold the fibrous composite in an ambient temperature which is at least 110.5°C and at most the melting point of the PGA resin for at least 0.0012 seconds (more preferably at least 0.0015 seconds) after discharging the composite as necessary. As a result, the single fiber fineness of the drawn yarn becomes low, which tends to result in a composite fiber with an even higher tensile strength. On the other hand, when the fibrous composite that is discharged from the spinneret is held in an ambient temperature exceeding the melting point of the PGA resin immediately after being discharged, the fibrous composite tends to be prone to thread breakage in some parts during the period until the composite is taken up, which tends to lead to a lack of productivity. In addition, the upper limit of the retention time is not particularly limited but is preferably 0.9 seconds or shorter and more preferably 0.09 seconds or shorter from the perspective of spinnability.

The retention method is not particularly limited, but the temperature can typically be retained by passing the fibrous composite described above through the ambient temperature described above for a prescribed amount of time. The method of forming the ambient temperature of the present invention is not particularly limited as long as the fibrous composite is held in the ambient temperature described above immediately after being discharged from the spinneret, and the atmosphere can be formed using a heat-retaining hood having a heating function (hereafter described as a "heating mantle"). For example, in the melt spinning device illustrated in FIG. 2, a heating mantle 5 is mounted beneath the spinneret 4 (discharge port), and the ambient temperature of the present invention is formed by heating the inside of the heating mantle as necessary. In addition, the retention time can be adjusted by changing the region (in particular, the length in the transfer direction of the fibrous composite) in the ambient temperature of the present invention, specifically changing the length of the heating mantle or the preset temperature of the heating mantle, or by changing the discharge volume or spinning rate (drawing rate) of the resin.

In the ambient temperature of the present invention, it is not absolutely necessary for the temperature to be constant, and the atmosphere may have a temperature distribution. For example, in the melt spinning device illustrated in FIG. 2, there may be a temperature distribution inside the heating mantle as long as an atmosphere at a temperature of at least 110.5°C and at most the melting point of the PGA resin is formed inside the heating mantle. The temperature (temperature distribution) inside such a heating mantle can be measured using an infrared laser thermometer or the like, which makes it possible to confirm that the ambient temperature of the present invention has been formed inside the heating mantle.

One example of a method of forming such an ambient temperature of the present invention is that heating the inside of the heating mantle so that the maximum temperature inside the heating mantle is no higher than the melting point of the PGA resin and the temperature in the vicinity of the outlet of the heating mantle is 110.5°C or higher. In the method of producing the water-disintegrable composite fiber of the present invention, the temperature in the vicinity of the outlet of the heating mantle is not necessarily set to 110.5°C or higher, and the temperature in the vicinity of the outlet of the heating mantle may be 100°C or lower as long as the fibrous composite can be held for a prescribed amount of time in the ambient temperature of the present invention.

The preset temperature of the heating mantle is not particularly limited as long as the ambient temperature of the present invention is formed. However, for example, when the temperature of the heating mantle is set to 100°C, a temperature distribution is formed where the temperature gets lower in the direction in which the fibrous composite is transferred, so an ambient temperature at 110.5°C or higher cannot be formed in the area from the spinneret outlet to the vicinity of the outlet of the heating mantle. Therefore, it is typically preferable to set the temperature of the heating mantle to 110°C or higher (and more preferably 120°C or higher).

In the heat retaining step of the present invention, the fibrous composite formed in the discharge step is typically held in the ambient temperature of the present invention while being taken up. The take-up rate (spinning rate) of the fibrous composite is not particularly limited, but it is particularly preferable to take up the fibrous composite at a take-up rate such that the mass per unit length of a single fiber constituting an undrawn yarn (hereafter called an "undrawn single fiber") is $6 \times 10^{-4}$ g/m or greater (and more preferably $13 \times 10^{-4}$ g/m or greater). As a result, a composite fiber with an even higher tensile strength tends to be obtained. The mass per unit length of the undrawn single fiber changes depending on factors such as the hole diameter of the spinneret and the discharge volume per hole of the spinneret, so the take-up rate is set while taking these factors into consideration so as to achieve the desired mass per unit length of the undrawn single fiber.

(Cooling step)

Next, the resulting fibrous composite is cooled to obtain an undrawn yarn comprising the PGA resin phase and the other resin phase, and having a side surface in which the region formed from the PGA resin phase is 50% or less in terms of area ratio (preferably 40% or less, more preferably 30% or less, even more preferably 15% or less, and particularly preferably 10% or less) and a cross section in which the region formed from the PGA resin phase is 50% or greater in terms of area ratio (preferably 55% or greater, more preferably 60% or greater, even more preferably 70% or greater, particularly preferably 80% or greater, and most preferably 99% or greater). This cooling process is typically performed while taking up the fibrous composite. The cooling method of the fibrous composite is not particularly limited, but air cooling is preferable from the perspective of simplicity.

In this cooling step, the fibrous composite is particularly preferably taken up so that the mass per unit length of the undrawn single fiber is $6 \times 10^{-4}$ g/m or higher (and more preferably $13 \times 10^{-4}$ g/m or higher). As a result, a composite fiber with an even higher tensile strength tends to be obtained.

An undrawn yarn that is cooled in this way is coated with an oiling agent for fibers as necessary in order to further enhance the unwindability of the undrawn yarn and is then taken up with a roller or the like, and wound around a bobbin or the like or housed in a tow can. For example, in the melt spinning device illustrated in FIG. 2, after an oiling agent for fibers is applied with an oiling agent application device 6, the yarn is taken up by take-up rollers 7 to 13 and wound around an undrawn yarn bobbin 14.

(Storage step)

Since the water-disintegrable composite fiber of the present invention demonstrates excellent unwindability in the undrawn yarn, the fiber can be wound around a bobbin or the like or housed in a sliver can for storage. As a result, the undrawn yarn can be produced and stored in large quantities and can also be supplied stably, which enables the adjustment of the production of a drawn yarn.

The storage temperature is not particularly limited, but the undrawn yarn can be stably stored at 25 to 40°C. When stored at a temperature less than the lower limit described above, a cooling device becomes necessary, which is not preferable from an economic standpoint. That is, in the method of producing the water-disintegrable composite fiber of the present invention, low-temperature storage is unnecessary, so it is possible to cut the production cost (storage cost) when producing a drawn yarn. On the other hand, when stored at a temperature exceeding the upper limit described above, the Tg of PGA resin of the undrawn yarn decreases with time in short period of time, and when the PGA resin is exposed to the side surface of the composite fiber, the agglutination of the undrawn yarn may occur, which is not preferable.

The storage time in the method of producing the water-disintegrable composite fiber of the present invention is not particularly limited, but the fiber can be stored, for example, for 24 hours or longer in an environment with a temperature of 30°C and a relative humidity of 80%RH.

(Drawing step)

Since the water-disintegrable composite fiber of the present invention demonstrates excellent unwindability in the undrawn yarn, the undrawn yarn that is wound around a bobbin or the like or housed in a sliver can for storage as described above can be drawn after being pulled out while being unwound. As a result, it is possible to obtain a drawn yarn comprising the PGA resin phase and the other resin phase, and having a side surface in which the region formed from the PGA resin phase is 50% or less in terms of area ratio (preferably 40% or less, more preferably 30% or less, even more preferably 15% or less, and particularly preferably 10% or less) and a cross section in which the region formed from the PGA resin phase is 50% or greater in terms of area ratio (preferably 55% or greater, more preferably 60% or greater, even more preferably 70% or greater, particularly preferably 80% or greater, and most preferably 99% or greater).

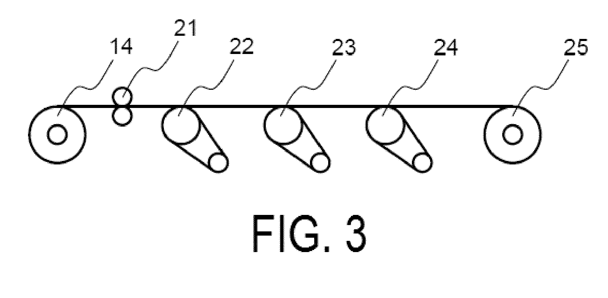

In the method of producing the water-disintegrable composite fiber of the present invention, the drawing temperature and draw ratio are not particularly limited and can be set appropriately in accordance with the desired physical properties of the composite fiber, for example, the drawing temperature is preferably from 40 to 120°C, and the draw ratio is preferably from 2.0 to 6.0. In addition, the drawing method is not particularly limited, and a conventionally known fiber drawing method can be employed. For example, when drawing an undrawn yarn using the drawing device illustrated in FIG. 3, an undrawn yarn is pulled out from a bobbin 14 via a feed roller 21, and after the undrawn yarn is drawn using rollers 22 and 23, the resulting drawn yarn is wound around a bobbin 25.

The drawn yarn that is obtained in this way may be used directly as a long fiber or may be cut so as to form a staple fiber. The cutting method is not particularly limited, and a cutting method used in the production method for a known staple fiber can be employed.

In addition, by removing either the PGA resin or the other resin in the water-disintegrable composite fiber of the present invention (in particular, the drawn yarn), it is possible to obtain fibers of various structures in accordance with the structure of the composite fiber, and this can be cut to form a staple fiber. For example, hollow fibers can be obtained by removing the PGA resin from concentric core-sheath type (FIG. 1A), eccentric core-sheath type (FIG. 1B), and multicore type (FIG. 1C) water-disintegrable composite fibers. On the other hand, by removing the other resin, it is possible to obtain a PGA resin single fiber having a smaller fiber diameter than the water-disintegrable composite fiber of the present invention. In addition, a PGA resin single fiber with a radial cross section can be obtained by removing a single fiber of the PGA resin or the other resin having a semicircular cross section from a side-by-side type (FIG. 1D) water-disintegrable composite fiber, by removing a single fiber of the PGA resin or the other resin having a fan-shaped cross section from a multiple-division type (FIG. 1E) water-disintegrable composite fiber, by removing a single fiber of the PGA resin or the other resin having a flat cross section from a multilayer type (FIG. 1F) water-disintegrable composite fiber, or removing the other resin from a radial type (FIG. 1G) water-disintegrable composite fiber.

Examples of methods for removing resins from the water-disintegrable composite fiber of the present invention include a method of separating the PGA resin phase and the other resin phase by peeling and a method of dissolving one of the resins by immersing the water-disintegrable composite fiber in a solvent that is a good solvent for one of the PGA resin or the other resin and a poor solvent for the other. The solvent used in the dissolution method is not particularly limited.

Examples

The present invention will be described in further detail hereinafter based on working examples and comparative examples, but the present invention is not limited to the following working examples. The physical properties of the resins and the properties of the undrawn and drawn yarns were measured with the following methods.

<Glass transition temperature>

Resin pellets (diameter: 3 mm × length: 3 mm) were cut to an appropriate size with a nipper, and 10 mg was weighed on an aluminum pan with a volume of 160 μL. This was mounted on a differential scanning calorimeter ("DSC-15" made by the Mettler Toledo) and heated from -50°C to 280°C at 20°C/min, and the glass transition temperature Tg (unit: °C) was calculated from the resulting DSC curve. The results are shown in Table 1.

<Mass loss>

In 100 mL of pure water, 2 g of resin pellets (diameter: 3 mm × length: 3 mm) were immersed and held for 7 days at 80°C. The mass of the resin pellets after being held was measured, and the mass loss after being immersed for 7 days in 80°C pure water was determined. The results are shown in Table 1.

Table 1

| Resin | | Glass transition temperature (°C) | Mass loss (%) |
|---|---|---|---|
| Polyglycolic acid | PGA | 43 | 70 |
| Poly(L-lactic-co-ε-caprolactone) (70/30) | PLLC | 30 | 27 |
| Poly-L-lactic acid | PLLA | 57 | 30 |
| Poly-DL-lactic acid | PDLLA | 56 | 64 |
| Polyvinyl alcohol | PVA | 85 | 100 |
| Polyhydroxybutyrate | PHB | 15 | 4 |
| Polybutylene succinate | PBS | -32 | 2 |
| Polycaprolactone | PCL | -60 | 3 |

<Unwindability>

A bobbin around which an undrawn yarn was wound was mounted on a drawing device illustrated in FIG. 3, and the undrawn yarn was unwound and pulled out from a bobbin 14 via a feed roller 21 with a first heating roller 22 at a temperature of 65°C and a circumferential speed of 100 m/min. The unwound undrawn yarn was wound around a bobbin 25 via a second heating roller 23 and a third heating roller 24. The unwindability of the undrawn yarn at this time was evaluated under the following criteria.

A: no thread breakage was observed, and the unwindability was uniform and good.
B: no thread breakage was observed, but threads adhered to one another, and the unwindability was partially ununiform.

C: thread breakage were often observed, and it was difficult to unwind and draw the undrawn yarn.

<Single fiber fineness>

90 m of an undrawn yarn was hanked on a rewinder with a frame circumference of 1 m, and the absolute dry mass M was measured. The single fiber fineness was calculated from the following formula.

$$\text{Single fiber fineness (denier)} = 100 \times M/H$$

Here, M is the absolute dry mass (g) of the drawn yarn, and H is the number of holes (=24 holes) of the spinneret.

<Tensile strength and tensile elongation>

An undrawn yarn with a length of 150 mm or a drawn yarn with a length of 250 mm was mounted in a precision universal tester ("Autograph" made by the Shimadzu Corporation) equipped with a catching chuck for a tire cord. Tensile tests were performed at a cross head speed of 250 mm/min, and the strength and elongation when the yarn broke were measured. This measurement was performed for five drawn yarns, and the average values were used as the tensile strength and tensile elongation. The measurement environment was controlled to a temperature of 23°C and a relative humidity of 50%RH.

<Water disintegrability>

In 100 mL of pure water, 2 g of a drawn yarn was immersed and held for 3 days at 40°C or 80°C. The mass of the drawn yarn after being held was measured, and the mass loss after being immersed in 40°C or 80°C pure water for 3 days was determined.

(Working Example 1)

<Production of a PGA/PLLA composite undrawn yarn>

A PGA/PLLA composite undrawn yarn was produced using the melt spinning device illustrated in FIG. 2. A temperature-controllable heating mantle 5 with a length of 150 mm and an inner diameter of 100 mm was mounted beneath a spinneret 4 for composite fibers of the melt spinning device. In the following explanations and drawings, elements that are identical or equivalent are labeled with the same symbols, and duplicate explanations will be omitted.

First, a pellet form PGA resin (made by Kureha Corporation, average molecular weight: 200,000, melt flow rate (MFR, temperature: 240°C): 10 g/10 min, glass transition temperature: 43°C, melting point: 220°C, size: 3 mm in diameter × 3 mm in length) was loaded into a single-screw extruder 2a (made by Plagiken Co. Ltd., cylinder diameter: 30 mm, L/D=24) from a raw material hopper 1a and melted at 210 to 250°C. The cylinder temperature of the extruder 2a was set to 215 to 250°C, and the adapter temperature, the gear pump temperature, and the spin pack temperature were set to 250°C.

On the other hand, a pellet form PLLA resin ("4032D", made by the Nature Works LLC, melt flow rate (MFR, temperature: 240°C): 10 to 30 g/10 min, glass transition temperature: 57°C, melting point: 160 to 170°C) was loaded into a single-screw extruder 2b (made by Plagiken Co. Ltd., cylinder diameter: 25 mm, L/D=24) from a raw material hopper 1b and melted at 170 to 250°C. The cylinder temperature of the extruder 2b was set to 170 to 200°C, and the adapter temperature and gear pump temperature were set to 200°C, while the spin pack temperature was set to 250°C.

The molten PGA resin and the molten PLLA resin were continuously supplied into the spinneret 4 (core-sheath type for composite fibers, area ratio of the core part to the sheath part on the discharge port cross section: core part/sheath part = 90/10, hole size: 0.40 mm, 24 holes, temperature: 250°C) using gear pumps 3a and 3b, respectively, so that the core part of the composite fiber was the PGA resin phase and the sheath part of the composite fiber was the PLLA resin phase, and after the resins were discharged from the spinneret 4 to form a fibrous PGA/PLLA composite, the composite was passed through a heating mantle 5 set to 120°C. The fibrous PGA/PLLA composite was then air-cooled, and the resulting PGA/PLLA composite undrawn yarn was coated with an oiling agent for fibers ("Lurol", made by the GOULSTON). The yarn was taken up with a first take-up roller 7 at a circumferential speed of 1,000 m/min, and a core-sheath type PGA/PLLA composite undrawn yarn (core part: PGA resin, sheath part: PLLA resin) was wound around a bobbin 14 every 5,000 m via second to seventh take-up rollers 8 to 13.

<Storage and evaluation of a PGA/PLLA composite undrawn yarn>

Bobbins around which the PGA/PLLA composite undrawn yarn was wound were placed in a constant temperature and humidity chamber ("HPAV-120-20", made by ISUZU) and respectively stored for 24 hours in a temperature at 23°C and a relative humidity of 50%RH or a temperature at 40°C and a relative humidity of 80%RH. The unwindability and tensile elongation of the PGA/PLLA composite undrawn yarns after storage were evaluated in accordance with the methods described above. The results are shown in Table 2.

<Production and evaluation of a PGA/PLLA composite drawn yarn>

A bobbin around which a PGA/PLLA composite undrawn yarn was wound after storage was mounted on the drawing device illustrated in FIG. 3, and this PGA/PLLA composite undrawn yarn was unwound and drawn from the bobbin 14 via the feed roller 21 using a first heating roller 22 and a second heating roller 23. A core-sheath type PGA/PLLA composite drawn yarn (core part: PGA resin, sheath part: PLLA resin) was wound around a bobbin 25 via a third heating roller 24. The drawing temperature was set to 65°C, and the draw ratio was set to 4.5 times by adjusting the circumferential speeds of the first and second heating rollers. The single fiber fineness, the tensile strength, the tensile elongation, and the mass loss of the resulting PGA/PLLA composite drawn yarn were measured in accordance with the evaluation methods described above. These results are shown in Table 2.

<Retention time calculation>

In the working examples and comparative examples, the maximum length from the spinneret outlet to a point P where the temperature was 110.5°C or higher was defined as the "effective heating mantle length" and was determined as follows. That is, the temperature distribution during resin discharge inside the heating mantle set to 120°C was measured for the discharge direction of the resin using an infrared laser thermometer. As a result, the temperatures were respectively 200°C, 170°C, and 130°C at points at lengths of 10 mm, 60 mm, and 120 mm from the spinneret outlet. Next, the point P farthest from the spinneret outlet was determined from among the points at 110.5°C or higher inside the heating mantle in the discharge direction based on this temperature distribution. The length from the spinneret outlet to the point P was then determined, and this was used as the "effective heating mantle length". The effective heating mantle length in Working Example 1 was 150 mm.

Using the circumferential speed of the first take-up roller (1,000 m/min) as the spinning rate, the amount of time (seconds) that the fibrous PGA resin was held in an atmosphere at a temperature of at least 110.5°C and at most the melting point of the PGA resin after being discharged from the spinneret was calculated based on the effective heating mantle length. The results are shown in Table 2.

<Spinning time calculation>

The spinning time (seconds) was calculated from the distance from the spinneret outlet to the bobbin (2 m) and the spinning rate. The results are shown in Table 2.

(Working Example 2)

A core-sheath type PGA/PLLA composite undrawn yarn (core part: PGA resin, sheath part: PLLA resin) was produced in the same manner as in Working Example 1 with the exception of using a core-sheath type composite fiber spinneret (hole size: 0.40 mm, 24 holes) in which the area ratio of the core part to the sheath part on the discharge port cross section was core part/sheath part = 70/30 as the spinneret 4, and this was stored under two conditions. Furthermore, a core-sheath type PGA/PLLA composite drawn yarn (core part: PGA resin, sheath part: PLLA resin) was produced in the same manner as in Working Example 1 with the exception of changing the draw ratio to 4.0 times. The unwindability and the tensile elongation of the PGA/PLLA composite undrawn yarn after storage and the single fiber fineness, the tensile strength, the tensile elongation, and the mass loss of the PGA/PLLA composite drawn yarn were evaluated in accordance with the methods described above. These results are shown in Table 2.

(Working Example 3)

A core-sheath type PGA/PLLA composite undrawn yarn (core part: PGA resin, sheath part: PLLA resin) was produced in the same manner as in Working Example 1 with the exception of using a core-sheath type composite fiber spinneret (hole size: 0.40 mm, 24 holes) in which the area ratio of the core part to the sheath part on the discharge port cross section was core part/sheath part = 60/40 as the spinneret 4, and this was stored under two conditions. Furthermore, a core-sheath type PGA/PLLA composite drawn yarn (core part: PGA resin, sheath part: PLLA resin) was produced in the same manner as in Working Example 1 with the exception of changing the draw ratio to 3.7 times. The unwindability and the tensile elongation of the PGA/PLLA composite undrawn yarn after storage and the single fiber fineness, the tensile strength, the tensile elongation, and the mass loss of the PGA/PLLA composite drawn yarn were evaluated in accordance with the methods described above. These results are shown in Table 2.

(Working Example 4)

A core-sheath type PGA/PLLA composite undrawn yarn (core part: PGA resin, sheath part: PLLA resin) was produced in the same manner as in Working Example 1 with the exception of using a core-sheath type composite fiber spinneret (hole size: 0.40 mm, 24 holes) in which the area ratio of the core part to the sheath part on the discharge port cross section was core part/sheath part = 50/50 as the spinneret 4, and this was stored under two conditions. Furthermore, a core-sheath type PGA/PLLA composite drawn yarn (core part: PGA resin, sheath part: PLLA resin) was produced in the same manner as in Working Example 1 with the exception of changing the draw ratio to 3.5 times. The unwindability and the tensile elongation of the PGA/PLLA composite undrawn yarn after storage and the single fiber fineness, the tensile strength, the tensile elongation, and the mass loss of the PGA/PLLA composite drawn yarn were evaluated in accordance with the methods described above. These results are shown in Table 2.

(Working Example 5)

A PGA/PLLA composite undrawn yarn (core part: PGA resin, sheath part: PLLA resin) was produced in the same manner as in Working Example 1 with the exception that a heating mantle was not mounted, and this was stored under two conditions. Furthermore, a PGA/PLLA composite drawn yarn (core part: PGA resin, sheath part: PLLA resin) was produced in the same manner as in Working Example 1 with the exception of changing the draw ratio to 3.5 times. The unwindability and the tensile elongation of the PGA/PLLA composite undrawn yarn after storage and the single fiber fineness, the tensile strength, the tensile elongation, and the mass loss of the PGA/PLLA composite drawn yarn were evaluated in accordance with the methods described above. These results are shown in Table 2.
Since a heating mantle was not mounted, the atmospheric temperature in the vicinity of the spinneret outlet was room temperature (23°C). Accordingly, the amount of time that the fibrous PGA/PLLA composite was held in a prescribed ambient temperature was 0 seconds. In addition, the spinning time was calculated in the same manner as in Working Example 1. These results are shown in Table 2.

(Working Example 6)

A PGA/PLLA composite undrawn yarn (core part: PGA resin, sheath part: PLLA resin) was produced in the same manner as in Working Example 5 with the exception of using a core-sheath type composite fiber spinneret (hole size: 0.40 mm, 24 holes) in which the area ratio of the core part to the sheath part on the discharge port cross section was core part/sheath part = 90/10 as the spinneret 4 and changing the spinning rate to 1,200 m/min. In the PGA/PLLA composite undrawn yarn that was produced, 20% of the PGA resin phase was exposed in terms of area ratio on the side surface of the composite fiber, and the yarn was stored under two conditions. Furthermore, PGA/PLLA composite drawn yarn (core part: PGA resin, sheath part: PLLA resin) was produced in the same manner as in Working Example 5 with the exception of changing the draw ratio to 4.0 times. The unwindability and the tensile elongation of the PGA/PLLA composite undrawn yarn after storage and the single fiber fineness, the tensile strength, the tensile elongation, and the mass loss of the PGA/PLLA composite drawn yarn were evaluated in accordance with the methods described above. These results are shown in Table 2.

(Working Example 7)

A PGA/PLLA composite undrawn yarn (core part: PGA resin, sheath part: PLLA resin) was produced in the same manner as in Working Example 5 with the exception of using a core-sheath type composite fiber spinneret (hole size: 0.40 mm, 24 holes) in which the area ratio of the core part to the sheath part on the discharge port cross section was core part/sheath part = 90/10 as the spinneret 4, and changing the spinning rate to 1,500 m/min. In the PGA/PLLA composite undrawn yarn that was produced, 40% of the PGA resin phase was exposed in terms of area ratio on the side surface of the composite fiber, and the yarn was stored under two conditions. Furthermore, PGA/PLLA composite drawn yarn (core part: PGA resin, sheath part: PLLA resin) was produced in the same manner as in Working Example 5 with the exception of changing the draw ratio to 3.7 times. The unwindability and the tensile elongation of the PGA/PLLA composite undrawn yarn after storage and the single fiber fineness, the tensile strength, the tensile elongation, and the mass loss of the PGA/PLLA composite drawn yarn were evaluated in accordance with the methods described above.

These results are shown in Table 2.

(Working Example 8)

A PGA/PLLC composite undrawn yarn (core part: PGA resin, sheath part: PLLC resin) was produced in the same manner as in Working Example 5 with the exception of changing the resin constituting the sheath part to poly(L-lactic acid-co-ε-caprolactone) (PLLC), and this was stored under two conditions. Furthermore, a PGA/PLLC composite drawn yarn (core part: PGA resin, sheath part: PLLC resin) was produced in the same manner as in Working Example 5 with the exception of changing the draw ratio to 3.7. The unwindability and the tensile elongation of the PGA/PLLC composite undrawn yarn after storage and the single fiber fineness, the tensile strength, the tensile elongation, and the mass loss of the PGA/PLLC composite drawn yarn were evaluated in accordance with the methods described above. In addition, since part of the PLLC resin phase had peeled in the resulting PGA/PLLC composite drawn yarn, 2% of the PGA resin phase was exposed in terms of area ratio on the side surface of the composite fiber. These results are shown in Table 2.

(Comparative Example 1)

A PGA resin undrawn yarn was prepared in the same manner as in Working Example 1 with the exception that a single fiber spinneret (hole size: 0.40 mm, 24 holes) was used as the spinneret 4 and that a heating mantle was not mounted, and this was stored under two conditions. It was not possible to obtain a drawn yarn due to the agglutination of the undrawn yarn at the time of storage. These results are shown in Table 3.
Since a heating mantle was not mounted, the atmospheric temperature in the vicinity of the spinneret outlet was room temperature (23°C). Accordingly, the amount of time that the fibrous PGA resin was held in a prescribed ambient temperature was 0 seconds. In addition, the spinning time was calculated in the same manner as in Working Example 1. These results are shown in Table 3.

(Comparative Example 2)

A PLLA resin undrawn yarn was prepared in the same manner as in Working Example 1 with the exception of using a single fiber spinneret (hole size: 0.40 mm, 24 holes) as the spinneret 4 and continuously supplying only a molten PLLA resin to this spinneret 4, and this was stored under two conditions. Furthermore, a PLLA resin drawn yarn was prepared in the same manner as in Working Example 1 with the exception of changing the draw ratio to 3.0 times. The unwindability and the tensile elongation of the PLLA resin undrawn yarn after storage and the single fiber fineness, the tensile strength, the tensile elongation, and the mass loss of the PLLA resin drawn yarn were evaluated in accordance with the methods described above. These results are shown in Table 3.

(Comparative Example 3)

A PGA/PLLA composite undrawn yarn (core part: PGA resin, sheath part: PLLA resin) was produced in the same manner as in Working Example 1 with the exception of using a core-sheath type composite fiber spinneret (hole size: 0.40 mm, 24 holes) in which the area ratio of the core part to the sheath part on the discharge port cross section was core part/sheath part = 10/90 as the spinneret 4, and this was stored under two conditions. Furthermore, a PGA/PLLA composite drawn yarn (core part: PGA resin, sheath part: PLLA resin) was produced in the same manner as in Working Example 1 with the exception of changing the draw ratio to 3.3 times. The unwindability and the tensile elongation of the PGA/PLLA composite undrawn yarn after storage and the single fiber fineness, the tensile strength, the tensile elongation, and the mass loss of the PGA/PLLA composite drawn yarn were evaluated in accordance with the methods described above. These results are shown in Table 3.

(Comparative Example 4)

A PGA/PLLA composite undrawn yarn (core part: PGA resin, sheath part: PLLA resin) was produced in the same manner as in Working Example 1 with the exception of using a core-sheath type composite fiber spinneret (hole size: 0.40 mm, 24 holes) in which the area ratio of the core part to the sheath part on the discharge port cross section was core part/sheath part = 20/80 as the spinneret 4, and this was stored under two conditions. Furthermore, a PGA/PLLA composite drawn yarn (core part: PGA resin, sheath part: PLLA resin) was produced in the same manner as in Working Example 1 with the exception of changing the draw ratio to 3.0 times. The unwindability and the tensile elongation of the PGA/PLLA composite undrawn yarn after storage and the single fiber fineness, the tensile strength, the tensile elongation, and the mass loss of the PGA/PLLA composite drawn yarn were evaluated in accordance with the methods

**EP 2 821 534 A1**

described above. These results are shown in Table 3.

(Comparative Example 5)

A PGA/PLLA composite undrawn yarn (core part: PGA resin, sheath part: PLLA resin) was produced in the same manner as in Working Example 1 with the exception of using a core-sheath type composite fiber spinneret (hole size: 0.40 mm, 24 holes) in which the area ratio of the core part to the sheath part on the discharge port cross section was core part/sheath part = 40/60 as the spinneret 4, and this was stored under two conditions. Furthermore, a PGA/PLLA composite drawn yarn (core part: PGA resin, sheath part: PLLA resin) was produced in the same manner as in Working Example 1 with the exception of changing the draw ratio to 3.5 times. The unwindability and the tensile elongation of the PGA/PLLA composite undrawn yarn after storage and the single fiber fineness, the tensile strength, the tensile elongation, and the mass loss of the PGA/PLLA composite drawn yarn were evaluated in accordance with the methods described above. These results are shown in Table 3.

(Comparative Example 6)

A PGA/PLLA composite undrawn yarn (core part: PGA resin, sheath part: PLLA resin) was produced in the same manner as in Working Example 5 with the exception of using a core-sheath type composite fiber spinneret (hole size: 0.40 mm, 24 holes) in which the area ratio of the core part to the sheath part on the discharge port cross section was core part/sheath part = 90/10 as the spinneret 4 and changing the spinning rate to 2,000 m/min. In the PGA/PLLA composite undrawn yarn that was produced, 55% of the PGA resin phase was exposed in terms of area ratio on the side surface of the composite fiber, and the yarn was stored under two conditions. It was not possible to obtain a drawn yarn due to the agglutination of the undrawn yarn at the time of storage. These results are shown in Table 3.

Table 2

| | | | Working Examples | | | |
|---|---|---|---|---|---|---|
| | | | 1 | 2 | 3 | 4 |
| Production conditions | | Heating mantle preset temperature (°C) | 120 | 120 | 120 | 120 |
| | | Spinning rate | 1000 | 1000 | 1000 | 1000 |
| | | Retention time (sec) | 0.009 | 0.009 | 0.009 | 0.009 |
| | | Spinning time (sec) | 0.12 | 0.12 | 0.12 | 0.12 |
| Composite fiber | | Fiber structure | Core-sheath type, core part: PGA, sheath part: PLLA | Core-sheath type, core part: PGA, sheath part: PLLA | Core-sheath type, core part: PGA, sheath part: PLLA | Core-sheath type, core part: PGA, sheath part: PLLA |
| | | Area ratio of PGA on the side surface (%) | 0 | 0 | 0 | 0 |
| | | Area ratio of PGA on the cross section (%) | 90 | 70 | 60 | 50 |
| After storage at 23°C, 50%RH | Undrawn yarn | Unwindability | A | A | A | A |
| | | Tensile elongation (%) | 378 | 305 | 273 | 264 |
| | Drawn yarn | Single fiber fineness (denier) | 1.52 | 2.60 | 2.81 | 3.15 |
| | | Tensile strength (gf/denier) | 7.2 | 5.5 | 5.1 | 4.2 |
| | | Tensile elongation (%) | 25 | 31 | 24 | 36 |
| | | 80°C mass loss (%) | 74 | 52 | 46 | 41 |
| | | 40°C mass loss (%) | 49 | 39 | 34 | 31 |
| After storage at 40°C, 80%RH | Undrawn yarn | Unwindability | A | A | A | A |
| | | Tensile elongation (%) | 273 | 201 | 192 | 171 |
| | Drawn yarn | Single fiber fineness (denier) | 1.63 | 2.83 | 2.91 | 3.40 |

| | | | 7.0 | 5.1 | 4.8 | 4.1 |
|---|---|---|---|---|---|---|
| | | Tensile strength (gf/denier) | 7.0 | 5.1 | 4.8 | 4.1 |
| | | Tensile elongation (%) | 21 | 23 | 25 | 29 |

Table 2 (Continued)

| | | | Working Examples | | | |
|---|---|---|---|---|---|---|
| | | | 5 | 6 | 7 | 8 |
| Production conditions | | Heating mantle preset temperature (°C) | - | - | - | - |
| | | Spinning rate (m/min) | 1000 | 1200 | 1500 | 1000 |
| | | Retention time (sec) | 0 | 0 | 0 | 0 |
| | | Spinning time (sec) | 0.12 | 0.10 | 0.08 | 0.12 |
| Composite fiber | | Fiber structure | Core-sheath type, core part: PGA, sheath part: PLLA | Core-sheath type, core part: PGA, sheath part: PLLA | Core-sheath type, core part: PGA, sheath part: PLLA | Core-sheath type, core part: PGA, sheath part: PLLC |
| | | Area ratio of PGA on the side surface (%) | 0 | 20 | 40 | 2 |
| | | Area ratio of PGA on the cross section (%) | 90 | 90 | 90 | 90 |
| After storage at 23°C, 50%RH | Undrawn yarn | Unwindability | A | A | A | A |
| | | Tensile elongation (%) | 293 | 287 | 266 | 230 |
| | Drawn yarn | Single fiber fineness (denier) | 2.98 | 2.93 | 2.98 | 3.34 |
| | | Tensile strength (gf/denier) | 6.4 | 5.9 | 5.6 | 5.7 |
| | | Tensile elongation (%) | 29 | 22 | 23 | 33 |
| | | 80°C mass loss (%) | 74 | 76 | 79 | 67 |
| | | 40°C mass loss (%) | 47 | 49 | 52 | 28 |
| After storage at 40°C, 80%RH | Undrawn yarn | Unwindability | A | A | B | A |
| | | Tensile elongation (%) | 155 | 159 | 156 | 153 |
| | Drawn yarn | Single fiber fineness (denier) | 1.48 | 1.92 | 1.89 | 3.91 |
| | | Tensile strength (gf/denier) | 6.1 | 5.3 | 5.5 | 5.1 |
| | | Tensile elongation (%) | 22 | 22 | 20 | 27 |

Table 3

| | | Comparative Examples | | | | | |
|---|---|---|---|---|---|---|---|
| | | 1 | 2 | 3 | 4 | 5 | 6 |
| Production conditions | Heating mantle preset temperature (°C) | - | 120 | 120 | 120 | 120 | - |
| | Spinning rate (m/min) | 1000 | 1000 | 1000 | 1000 | 1000 | 2000 |
| | Retention time (sec) | 0 | 0.009 | 0.009 | 0.009 | 0.009 | 0 |
| | Spinning time (sec) | 0.12 | 0.12 | 0.12 | 0.12 | 0.12 | 0.06 |
| Composite fiber | Fiber structure | PGA single fiber | PLLA single fiber | Core-sheath type, core part: PGA, sheath part: PLLA | Core-sheath type, core part: PGA, sheath part: PLLA | Core-sheath type, core part: PGA, sheath part: PLLA | Core-sheath type, core part: PGA, sheath part: PLLA |
| | Area ratio of PGA on the side surface (%) | 100 | 0 | 0 | 0 | 0 | 55 |
| | Area ratio of PGA on the cross section (%) | 100 | 0 | 10 | 20 | 40 | 90 |

(continued)

| | | | Comparative Examples | | | | | |
|---|---|---|---|---|---|---|---|---|
| | | | 1 | 2 | 3 | 4 | 5 | 6 |
| After storage at 23°C, 50%RH | Undrawn yarn | Unwindability | B | A | A | A | A | B |
| | | Tensile elongation (%) | - | 223 | 238 | 244 | 256 | - |
| | Drawn yarn | Single fiber fineness (denier) | - | 3.66 | 3.51 | 3.46 | 3.21 | - |
| | | Tensile strength (gf/denier) | - | 3.4 | 4.1 | 4.3 | 4.6 | - |
| | | Tensile elongation (%) | - | 37 | 33 | 34 | 29 | - |
| | | 80°C mass loss (%) | - | 13 | 21 | 21 | 22 | - |
| | | 40°C mass loss (%) | - | 15 | 22 | 20 | 23 | - |
| After storage 40°C, 80%RH | Undrawn yarn | Unwindability | C | A | A | A | A | C |
| | | Tensile elongation (%) | - | 129 | 131 | 138 | 155 | - |
| | Drawn yarn | Single fiber fineness (denier) | - | 3.22 | 3.05 | 3.11 | 2.97 | - |
| | | Tensile strength (gf/denier) | - | 3.2 | 3.9 | 3.9 | 4.4 | - |
| | | Tensile elongation (%) | - | 30 | 31 | 29 | 28 | - |

19

As is clear from the results shown in Table 2, in the core-sheath type composite fibers of the present invention (core part: PGA resin, sheath part: PLLA resin) having a cross section in which the region formed from the PGA resin is 50% or greater in terms of area ratio and a side surface in which the region formed from the PGA resin is 50% or less in terms of area ratio, agglutination did not be observed when the undrawn yarns were unwound after being stored under any of the storage conditions, and it was thus confirmed that the undrawn yarns demonstrated excellent unwindability. In addition, it was observed that the drawn yarns demonstrated excellent water disintegrability at both high and low temperatures and that the tensile strength and tensile elongation are also relatively high.

On the other hand, as is clear from the results shown in Table 3, even in the case of core-sheath type composite fibers having a core part formed from a PGA resin and a sheath part formed from a PLLA resin, when the region of the cross section of the fiber formed from the PGA resin was less than 50% in terms of area ratio (Comparative Examples 3 to 5), the undrawn yarns demonstrated excellent unwindability but the drawn yarns had poor water disintegrability. In addition, in a fiber consisting of only PGA resin (Comparative Example 1) and in a case in which the region of the cross section of the fiber formed from the PGA resin was 90% in terms of area ratio but the region of the side surface of the fiber formed from the PGA resin exceeded 50% in terms of area ratio (Comparative Example 6), the undrawn yarns demonstrated poor unwindability, and it was particularly difficult to stably produce drawn yarns from undrawn yarns stored at a high temperature and high humidity. Furthermore, in the case of a fiber consisting of only a PLLA resin (Comparative Example 2), the undrawn yarn demonstrated excellent unwindability, but the drawn yarn had a low tensile strength and poor water disintegrability.

Industrial Applicability

As described above, with the present invention, it is possible to obtain a water-disintegrable composite fiber having excellent unwindability. Accordingly, the undrawn water-disintegrable composite fiber of the present invention can be stored in state in which the fiber is wound around a bobbin or the like or housed in a tow can. Moreover, the fiber has excellent unwindability even when exposed to high temperature and high humidity, so the fiber can be suitably used for the mass production of a water-disintegrable composite drawn yarn. In addition, the resulting water-disintegrable composite drawn yarn has high strength and a high hydrolysis rate at both high and low temperatures, so the fiber is useful as a special functional fiber used in industrial fields or the like.

Furthermore, the water-disintegrable composite staple fiber of the present invention is useful for applications to the drilling or completion field of oil and gas recovery from the perspective of productivity improvement, drilling cost reduction, reduction in damage to subterranean formations, and reduction in environmental burden. For example, the fiber is useful as an additive for improving the productivity of a subterranean formation with low permeability. One method used for shale gas or shale oil recovery is hydraulic fracturing, and this fiber is useful at the time of hydraulic fracturing as auxiliary material for efficiently transporting proppant such as sand or as an auxiliary material for efficiently refluxing a fluid containing proppants such as sand.

Furthermore, the fiber is useful as an auxiliary material for uniformly treating subterranean formation in acid treatment using hydrochloric acid or the like, which is typically used in drilling or completion of oil and gas recovery. Specifically, by using a water-disintegrable composite staple fiber, it is possible to seal the subterranean formation through which fluids flow easily and to adjust the formation so that fluids flow at locations where fluid flow is desirable, and since the material decomposes at the time of production, this means that the productivity is not inhibited. Such a sealing function can also be applied to improve the product recovery efficiency by temporarily sealing holes intentionally formed in subterranean formations - in particular, in production layers from which petroleum or gas can be obtained.

Other related applications for which the fiber is useful include applications for preventing the clogging of screens using disintegrability by utilizing the water-disintegrable composite fiber to form the cake layer formed during drilling, and applications for preventing lost circulation of water or mud water into subterranean formations with high permeability or natural holes by adding a water-disintegrable composite staple fiber to mud water for drilling. In applications in which the fiber is added to mud water for drilling, it has the effects of reducing the viscosity of mud water and increasing the fluidity, by the releasing effect of acids released after decomposition of the fiber. Furthermore, by adding the water-disintegrable composite fiber to mud water for drilling, it is possible to reduce the amount of water or sand used, which makes it possible to reduce the drilling cost. In all of these applications, the water-disintegrable composite staple fiber has a disintegrating property, which yields the advantage that there is no damage to subterranean formations.

Reference Signs List

A PGA resin phase
B Other resin phase

1a, 1b: Raw material hoppers
2a, 2b: Extruders
3a, 3b: Gear pumps
4 Spinneret (spinning nozzle)
5 Heating mantle
6 Oiling agent application device
7-13 First through seventh take-up rollers
14 Undrawn yarn bobbin
21 Feed roller
22 First heating roller
23 Second heating roller
24 Third heating roller
15 Drawn yarn bobbin

**Claims**

1. A water-disintegrable composite fiber comprising: a phase containing a polyglycolic acid resin; and a phase containing another resin having a mass loss of 25% or greater after immersion for 7 days in 80°C pure water and having a glass transition temperature Tg of 25°C or higher;
the two phases extending continuously in the lengthwise direction; and
the fiber having a side surface in which a region formed from the phase containing the polyglycolic acid resin is 50% or less in terms of area ratio, and a cross section in which a region formed from the phase containing the polyglycolic acid resin is 50% or greater in terms of area ratio.

2. The water-disintegrable composite fiber according to claim 1, wherein the water-disintegrable composite fiber has at least one type of structure selected from a core-sheath type, a multicore type, a side-by-side type, a multiple-division type, a multilayer type, and a radial type structure.

3. The water-disintegrable composite fiber according to claim 1 or 2, wherein the other resin is at least one type selected from the group consisting of poly-L-lactic acid, poly-DL-lactic acid, polyvinyl alcohol, and poly(ethylene terephthalate/succinate).

4. The water-disintegrable composite fiber according to any one of claims 1 to 3, wherein the fiber is an undrawn fiber.

5. The water-disintegrable composite fiber according to any one of claims 1 to 3, wherein the fiber is a drawn fiber.

6. The water-disintegrable composite fiber according to claim 5, wherein a single fiber fineness is 10 denier or less.

7. A fiber obtained by removing either the polyglycolic acid resin or the other resin from the water-disintegrable composite fiber described in claim 5 or 6.

8. A water-disintegrable composite staple fiber obtained by cutting the water-disintegrable composite fiber described in claim 5 or 6.

9. The water-disintegrable composite staple fiber according to claim 8, wherein the staple fiber is used as an additive at a time of oil or gas drilling.

10. A method of producing a water-disintegrable composite fiber, the method comprising the steps of: continuously discharging a polyglycolic acid resin and another resin, the other resin having a mass loss of 25% or greater after immersion for 7 days in 80°C pure water and a glass transition temperature of 25°C or higher, from a spinneret for composite fibers in a molten state so as to form a fibrous composite; and
cooling the fibrous composite to obtain an undrawn yarn comprising a phase containing the polyglycolic acid resin and a phase containing the other resin, the undrawn yarn having a side surface in which a region formed from the phase containing the polyglycolic acid resin is 50% or less in terms of area ratio, and a cross section in which a region formed from the phase containing the polyglycolic acid resin is 50% or greater in terms of area ratio.

11. The method of producing a water-disintegrable composite fiber according to claim 10, wherein prior to the cooling of the fibrous composite, the fibrous composite formed when discharged from the spinneret is held in an ambient temperature which is at least 110.5°C and at most the melting point of the polyglycolic acid resin for at least 0.0012 seconds after the composite is discharged.

12. A method of producing a water-disintegrable composite fiber, the method comprising a step of drawing the undrawn yarn obtained by the production method according to claim 10 or 11 after being stored so as to obtain a drawn yarn comprising a phase containing the polyglycolic acid resin and a phase containing the other resin; the drawn yarn having a side surface in which a region formed from the phase containing the polyglycolic acid resin being 50% or less in terms of area ratio, and a cross section in which a region formed from the phase containing the polyglycolic acid resin being 50% or greater in terms of area ratio.

13. A method of producing a water-disintegrable composite fiber, wherein a water-disintegrable composite staple fiber is obtained by cutting a drawn yarn obtained by the production method described in claim 12.

FIG. 1A

FIG. 1B

FIG. 1C

FIG. 1D

FIG. 1E

FIG. 1F

FIG. 1G

FIG. 2

EP 2 821 534 A1

FIG. 3

# INTERNATIONAL SEARCH REPORT

| International application No. |
| --- |
| PCT/JP2013/054399 |

**A. CLASSIFICATION OF SUBJECT MATTER**
*D01F8/14*(2006.01)i, *D01F8/10*(2006.01)i

According to International Patent Classification (IPC) or to both national classification and IPC

**B. FIELDS SEARCHED**

Minimum documentation searched (classification system followed by classification symbols)
D01F8/00-8/18

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2000-265333 A (Takasago International Corp.), 26 September 2000 (26.09.2000), claims 1, 2, 5; paragraph [0024] & EP 1036865 A1 claims 1, 2, 5; paragraph [0025] & US 6235393 B1 & US 2001/0016258 A1 & DE 60014734 D & DE 60014734 T | 1-13 |

| ☒ Further documents are listed in the continuation of Box C. | ☐ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 April, 2013 (02.04.13) | 09 April, 2013 (09.04.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2013/054399 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-535500 A  (3M Innovative Properties Co.),<br>22 October 2002 (22.10.2002),<br>claims<br>& WO 2000/043579 A1<br>claims<br>& JP 10-511748 A          & US 6579814 B1<br>& EP 1161578 A1          & EP 800595 A1<br>& WO 1996/021057 A1      & DE 69521342 D<br>& AU 4559199 A           & AU 752662 B<br>& CA 2368511 A           & CN 1338010 A<br>& AU 4240496 A           & CA 2206921 A<br>& ZA 9510502 A           & CN 1171825 A<br>& AU 693978 B | 1-13 |
| A | JP 10-226924 A  (Mitsui Chemicals, Inc.),<br>25 August 1998 (25.08.1998),<br>claims 1, 4<br>& EP 848089 A2<br>claims 1, 4<br>& US 6090910 A           & DE 69732470 D<br>& DE 69732470 T | 1-13 |
| A | JP 52-84889 A  (Asahi Chemical Industry Co., Ltd.),<br>14 July 1977 (14.07.1977),<br>claims<br>(Family: none) | 1-13 |

Form PCT/ISA/210 (continuation of second sheet) (July 2009)

**EP 2 821 534 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2000265333 A